(19)

**Europäisches Patentamt**

**European Patent Office**

**Office européen des brevets**

(11) **EP 1 092 475 A2**

(12) **EUROPEAN PATENT APPLICATION**

(43) Date of publication:
18.04.2001 Bulletin 2001/16

(51) Int. Cl.⁷: **B02C 18/42**, C02F 9/00

(21) Application number: 00121602.7

(22) Date of filing: 02.10.2000

(84) Designated Contracting States:
**AT BE CH CY DE DK ES FI FR GB GR IE IT LI LU MC NL PT SE**
Designated Extension States:
**AL LT LV MK RO SI**

(30) Priority: 04.10.1999 JP 28263699

(71) Applicant:
**SANYO ELECTRIC Co., Ltd.**
**Moriguchi-shi, Osaka (JP)**

(72) Inventors:
• **Akamatsu, Kozo**
**Kanzaki-gun, Hyogo-ken (JP)**

• **Tamura, Toshihiro**
**Moriyama-shi, Shiga-ken (JP)**
• **Tanimoto, Yoshihiro**
**Kanzaki-hun, Hyogo-ken (JP)**
• **Fujimoto, Keiichi**
**Kato-gun, Hyogo-ken (JP)**
• **Yoneda, Isao**
**Himeji-shi, Hyogo-ken (JP)**
• **Takami, Hiroyuki**
**Kasai-shi, Hyogo-ken (JP)**

(74) Representative:
**Glawe, Delfs, Moll & Partner**
**Patentanwälte**
**Postfach 26 01 62**
**80058 München (DE)**

(54) **Waste water treatment apparatus**

(57) The waste water treatment apparatus has a first flow regulation tank (41a) for receiving kitchen waster water when a disposer is not used and discharging the supernatant of the waste water to a sewage pipe (6). When the disposer is in use, kitchen waste water is uptaken by a second flow regulation tank (41b). A constant volume of the waste water taken in the first flow regulation tank is transported by an air lift pump (47) to a liquid treatment tank (43) for further treatment. The waste water taken in the second flow regulation tank is transported to a solid-liquid separation apparatus (42), where the solid components and liquid components are separated. The liquid is transported to a liquid treatment tank (43), while the solids are transported to a compost apparatus (46) for composting them.

FIG.1

TO SEWAGE

EP 1 092 475 A2

## Description

FIELD OF THE INVENTION

The invention relates to a waste water treatment apparatus suitable for treating kitchen waste water containing crushed garbage discharged from a disposer.

BACKGROUND OF THE INVENTION

A typical waste water treatment system, known as all-volume type, is designed to treat kitchen waste water containing crushed garbage from a disposer in use and waste water from a sink not containing crushed garbage when the disposer is not in use.

Another type of waste water treatment system, as shown in Japanese Patent Publication No. 10-323657 (B09B 5/00), includes a water channel switcher for channeling only the waste water containing garbage from a disposer to a waste water treatment apparatus during use of the disposer but otherwise channeling waste water directly to a sewage system if the disposer is not in use.

The prior art all-volume type waste water treatment apparatus, however, has a drawback in that it must have a volume as large as a purification tank, and therefore requires a large construction work to bury the tank in the ground, which is difficult to apply to existing houses.

Another type of waste water treatment apparatuses have been known which are adapted to channel only garbage-containing waste water to a treatment apparatus by means of a water channel switcher while using a disposer. This type of apparatuses are advantageously compact in size. However, part of the garbage-containing waste water to be treated by the waste water treatment apparatus is unavoidably channeled to a sewage pipe, which results in contamination of rivers when the sewage is led to the rivers, or an overload to a sewage treatment system when the sewage is connected to the sewage treatment system, thereby creating environmental issues.

SUMMARY OF THE INVENTION

It is an object of the present invention to overcome such prior art problems by providing a waste water treatment apparatus which is compact in form and hence installable on the ground, and yet capable of successfully treating entire waste water from the kitchen irrespective of whether a disposer is used or not.

It is another object of the invention to provide an efficient waste water treatment apparatus for treating kitchen waste water.

It is a further object of the invention to provide a calm or noise-suppressed waste water treatment apparatus suitable for ground installation.

In view of the objects of the invention, a waste water treatment apparatus of the invention comprises: a first flow regulation tank for receiving waste water from a kitchen when a disposer is not used, and discharging overflowing water from said first flow regulation tank to a sewage pipe; a second flow regulation tank for receiving waste water from the kitchen when the disposer is used; a solid-liquid separation apparatus for receiving waste water from said second flow regulation tank to separate solids from the water; a liquid treatment tank for treating the solids separated in said solid-liquid separation apparatus using microorgans; and a first air lift pump for pumping the waste water from said first flow regulation tank to said liquid treatment tank.

In this arrangement, the waste water in the first flow regulation tank is transferred therefrom to the liquid treatment tank by the first air lift pump, so that the first flow regulation tank can always receive a substantial amount of waste water from the kitchen. Thus, the first flow regulation tank does not require a large volume, which allows the entire apparatus to have a reasonably compact size for installation on the ground. There is a chance that a large amount of waste water flows from the kitchen sink to the first flow regulation tank at a time, causing part of the waste water to overflow from the tank to the sewage. However, the overflowing water is a supernatant once treated in the tank while it is stored therein, so that the overflow would not pose serious pollution not only in quantity but also in water quality.

In addition, the waste water treatment apparatus may comprises a compost apparatus in which solid components obtained in the solid-liquid separation apparatus is collected for decomposition into compost by microorganism, thereby allowing full treatment of solids components in the waste water. The apparatus may be provided with a precipitate separation tank for receiving supernatant of the waste water treated in the liquid treatment tank to permit precipitation of solid components therein, and discharge clean supernatant water to the sewage pipe. A third air lift pump may be provided in the precipitate separation tank for pumping the precipitate therefrom to the second flow regulation tank for further cleaning of the kitchen waste water.

The waste water treatment apparatus may be further provided with a water-level sensor for detecting the level of water in the first flow regulation tank, and a controller for controlling the first air lift pump so as to permit a constant volume of water to be pumped from the first flow regulation tank to the liquid treatment tank by the first air lift pump.

Since the controller transfer a constant volume of water from the first flow regulation tank to the liquid treatment tank, the first flow regulation tank may always receive waste water from the kitchen without overflowing it, thereby allowing the liquid treatment tank to appropriately treat a moderate amount of waste water therein.

The inventive waste water treatment system may have a vertical pipe in at least one of the liquid treatment tank and the second flow regulation tank. The vertical pipe has a larger cross section than the air lift pump and is connected at the top end thereof to the waste water outlet section of the air lift pump. The vertical pipe has a ventiduct at an upper portion thereof and a depending bell-shape outlet section submerged in water so that the pumping air of the air lift pump transported with the waste water is discharged from the vertical pipe through the ventiduct while the water is allowed to calmly run down on the inner wall of the bell shape section, so that splashing noise of the waster water that could be otherwise generated by hitting the water in the tank is greatly suppressed.

An alternative vertical pipe may be provided in at least one of the liquid treatment tank or the second flow regulation tank. This vertical pipe has a larger cross section than the air lift pump and is connected at the side thereof to the waste water outlet section of the air lift pump. The vertical pipe has a ventiduct at an upper portion thereof and a depending outlet section submerged in water so that the pumping air of the air lift pump transported with the waste water is discharged from the vertical pipe through the ventiduct while the water is allowed to calmly run down on the inner wall of the vertical pipe, so that splashing noise of the waster water that could be otherwise generated by hitting the water in the tank is greatly suppressed.

In this case, the waste water outlet of the air lift pump may be positioned close to the inner wall of the vertical pipe, so that the waste water discharged from the air lift pump will calmly run down on the inner wall of the vertical pipe, thereby further suppressing the noise.

The vertical pipe may be provided with an air chamber above the waste water outlet of the air lift pump, with a ventiduct formed in the upper section of the air chamber. In this example, the air chamber has a very large inner volume, which causes the noise generated in the chamber during the operation of the air lift pump to destructively interfere with itself, thereby annihilate the noise.

The air chamber may have an upper section having a larger diameter than the vertical pipe and a lower section having an inclined wall which is continuous with the upper section, thereby allowing the waste water that has entered the air chamber to run down on the inclined wall and preventing accumulation of sludge near the ventiduct.

The ventiduct may can be a narrow pipe penetrating through the air chamber to the exterior thereof, and may have an air outlet directed downwardly, to thereby minimize the noise from escaping from the air chamber through the ventiduct. Such configuration will also prevent ingress of insects and dogging of dust in the ventiduct.

The portion of the narrow ventiduct inside the air chamber may be angularly offset from the waste water outlet of the air lift pump to prevent waste water from directly entering the ventiduct and resulting in clogging of the ventiduct.

The air chamber may be provided with a shielding panel which shields the air chamber from the waste water discharged from the air lift pump, preventing the waste water from directly entering the ventiduct and resulting in clogging of the ventiduct. The panel also helps suppress noises escaping from the air chamber.

BRIEF DESCRIPTION OF THE DRAWINGS

    Fig. 1 is an overall view of a waste water treatment system having a disposer 1, a waste water treatment apparatus 4, a controller 5, and a water channel switcher 40.
    Fig. 2 shows water level sensors installed in the first and the second flow regulator tanks.
    Fig. 3 is a graphical representation of a relationship between the required air lift time and the water level in the first flow regulation tank.
    Fig. 4 is a graphical representation of air lift time required to transport a constant volume of water as a function of water level in a tank.
    Fig. 5 is a flowchart showing in steps a procedure controlling the air lift pump transporting waste water from the first flow regulation tank to the liquid treatment tank.
    Fig. 6 is a schematic view of a vertical pipe provided connected to the waste water outlet of the air lift pump in the liquid treatment tank 43 having an almost constant water level.
    Figs. 7A and 7B are enlarged top and side views, respectively, of the waste water outlet of the air lift pump of Fig. 6.
    Figs. 8A and 8B are enlarged top and side views, respectively, of the waste water outlet of another air lift pump.
    Figs. 9A and 9B are enlarged top and side views, respectively, of the waste water outlet of a further air lift pump along with a horizontal pipe 471 which is similar to that of Fig. 7, but has an elongate ventiduct 476 extending above a horizontal pipe 471.
    Figs. 10A and 10B are enlarged top and side views, respectively, of the waste water outlet of a still further air lift pump, along with a bell shaped vertical pipe 472 which depends from one end of the horizontal pipe 471 of the air lift pump, and has a ventiduct 476 at an upper inclined section of the vertical pipe 472.
    Fig. 11 is a schematic view of a vertical pipe connected to the waste water outlet of the air lift pump in the second flow regulation tank 41b where water level changes greatly.
    Figs. 12A and 12B are enlarged top and side views, respectively, of the waste water outlet of the air lift pump of Fig. 11.

Figs. 13A and 13B are also enlarged top and side views, respectively, of the waste water outlet of another air lift pump.

Figs. 14A and 14B are also enlarged top and side views, respectively, of the waste water outlet of a further air lift pump near a shielding panel in an air chamber.

Figs. 15A and 15B are also enlarged top and side views, respectively, of the waste water outlet of a still further air lift pump near a shielding panel in an air chamber.

DETAILED DESCRIPTION OF THE PREFERRED EMBODIMENT

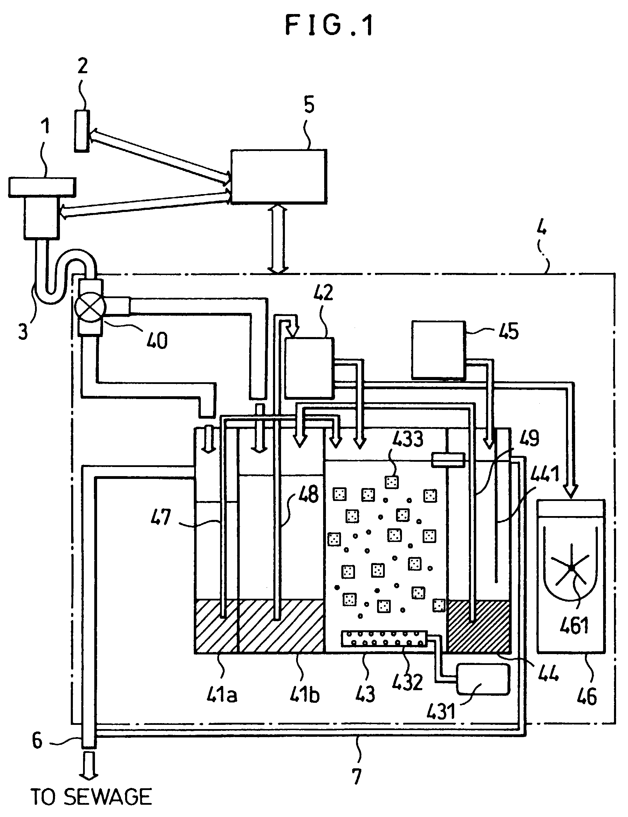

Referring now to Fig. 1, there is shown an entire system of the invention which includes: a disposer 1 connected to a kitchen sink; a control panel 2 for a user to control the system and confirm the operating condition of the system; a pipe 3 connected to the disposer 1 for channeling waste water that contains crushed garbage discharged from the disposer 1 to a waste water treatment apparatus 4; and a control unit 5 including a microcomputer to control the operation of the disposer 1, the control panel 2, and the waste water treatment apparatus 4. Although the control unit 5 is shown for simplicity as a separate component from the waste water treatment apparatus 4 in a preferred embodiment, it can be included in the waste water treatment apparatus 4, as claimed in claim 3.

The waste water treatment apparatus 4 includes such components as: a water channel switcher 40; a first flow regulation tank (uptake tank) 41a for receiving waste water from the water channel switcher 40 when a disposer is not in use; a second flow regulation tank 41b for receiving waste water containing crushed garbage from the disposer when the disposer is in use; a solid-liquid separation apparatus 42 for separating precipitated solid components from the waste water; a treatment tank 43 for treating part of the waste water received from the first flow regulation tank 41 and the residual fluid which is removed of solid components in the solid-liquid separation apparatus 42; a precipitate separation tank 44 for allowing the sludge formed in the treatment tank 43 to precipitate; a coagulant injector 45 for injecting a coagulant that promotes precipitation of the sludge or solid components; a compost apparatus 46 for treating solid components separated in the solid-liquid separation apparatus 42; and air lift pumps 47, 48, and 49 for transporting waste water between the respective tanks.

Although each of the air lift pumps 47, 48, and 49 of Fig. 1 is schematically shown by a simple thick arrow, it actually consists of an air lift pipe and a blower pump. Further, the blower pumps may be replaced by a common blower pump which has a multi-directional valve for switching different pipe connections.

Ordinary waste water from a kitchen, i.e. waste water when the disposer is not used, is channeled to the first flow regulation tank 41a which allows supernatant to overflow to a sewage pipe 6.

On the other hand, when the disposer is in use, the water channel switcher 40 is switched to channel waste water containing crushed garbage to the second flow regulation tank 41b.

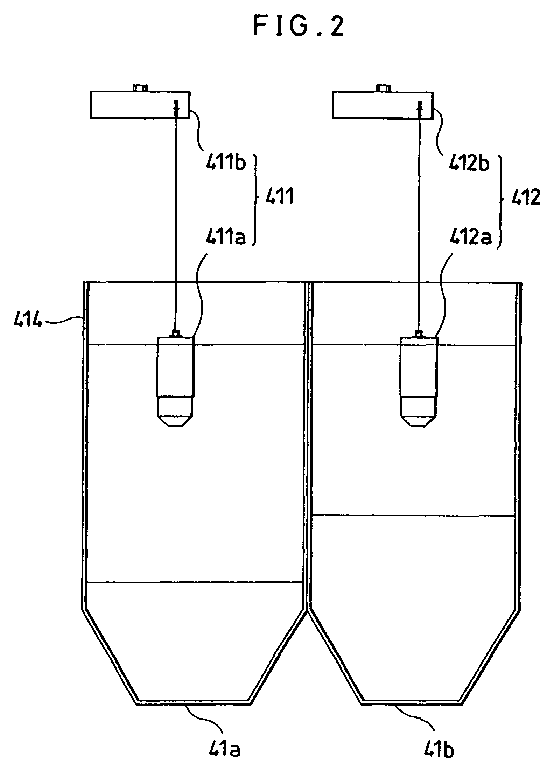

The first and the second flow regulation tanks 41a and 41b, respectively, are each provided with a float type water level sensor (e.g. sensors 411 and 412 as shown in Fig. 2). The detected water levels are informed to the control unit 5, which controls operation of the disposer 1 such that use of the disposer 1 is allowed if the water level in the second flow regulation tank 41b is lower than a predetermined level, but otherwise the use of the disposer 1 is prohibited. At the same time, the control panel 2 presents information as to the operability of the disposer 1. The first flow regulation tank 41a is provided with an air lift pump 47 for pumping up waste water staying at the bottom of the tank 41a and containing much organic materials to the liquid treatment tank 43. The second flow regulation tank 41b is provided with an air lift pump 48 for pumping up precipitates in the tank 41b to the solid-liquid separation apparatus 42. It is noted that the amount of fluid transported by an air lift pump per unit time interval depends on the water level in the tank, as described above. Thus, in order to transport substantially a constant volume of waste water at all water levels, the air lift pumps 47 and 48 are operated at a prescribed frequency for a predetermined period of time, under the control of the control unit 5 based on the water level detected by the water level sensors 411 and 412, respectively.

The mixture of solids components and a liquid pumped from the bottom of the second flow regulation tank 41b by the air lift pump 48 is deposited in the solid-liquid separation apparatus 42 for separation of solid components and liquid components.

The solid-liquid separation apparatus 42 has static and moveable sets of comb-shaped blades that engages with each other to drain water from solid components. The solid components thus separated is deposited in the compost apparatus 46.

The liquid components are discharged into the liquid treatment tank 43, while the solid components are discharged into the compost apparatus 46.

The liquid treatment tank 43 may be a tank for treating organic materials by microaerophilic bacteria in a well known process such as for example an activated sludge process, a contact aeration process, and a carrier fluidized bed process. The liquid treatment tank 43 is aerated by a blower pump 431 and an air diffuser 432. The liquid treatment tank 43 shown in Fig. 1 is a carrier fluidized bed type treatment tank in which carriers 433 carrying thereon inhabiting microaerophilic bacteria are circulated in the tank.

Thus, in the liquid treatment tank 43, organic materials are decomposed by the microaerophilic bacteria. At the same time, the sludge formed in the liquid treatment tank 43 overflows into the precipitate separation tank 44, where it is coagulated to precipitate on the bottom. The supernatant (or treated water) in the precipitate separation tank 44 is discharged into the sewage pipe 6 through a drain pipe 7. Provided at the upper section of the precipitate separation tank 44 is a partition panel 441 for preventing the waste water that has flown from the liquid treatment tank 43 into precipitate separation tank 44 from being directly discharged to the sewage pipe 7.

Precipitating sludge in the precipitate separation tank 44 is removed therefrom back to the second flow regulation tank 41b by the air lift pump 49. The sludge transferred back to the second flow regulation tank 41 is again mixed with fresh crushed garbage from the disposer 1 and sent to the solid-liquid separation apparatus 42 by the air lift pump 48 for further separation of water and solids and further treatment of solids in the compost apparatus 46.

Solid components collected in the compost apparatus 46 is decomposed by the bacteria accommodated on, and incubated by, wooden chips in the compost apparatus 46 while they are stirred by a stirrer 461 at a regular time interval, and turned to compost, which is later collected as a fertilizer.

Referring now to Fig. 2, a first and a second water sensors 411 and 412, respectively, are shown in the first and the second flow regulation tanks 41a and 41b, respectively. In the example shown herein, the first and the second water level sensors 411 and 412, respectively, comprise respective floats 411a and 412a and potentiometers 411b and 412b. Incidentally, as shown in Fig. 2, the overflow outlet 414 formed at the upper end of the first flow regulation tank 41a is connected to the sewage pipe 6 shown in Fig. 1.

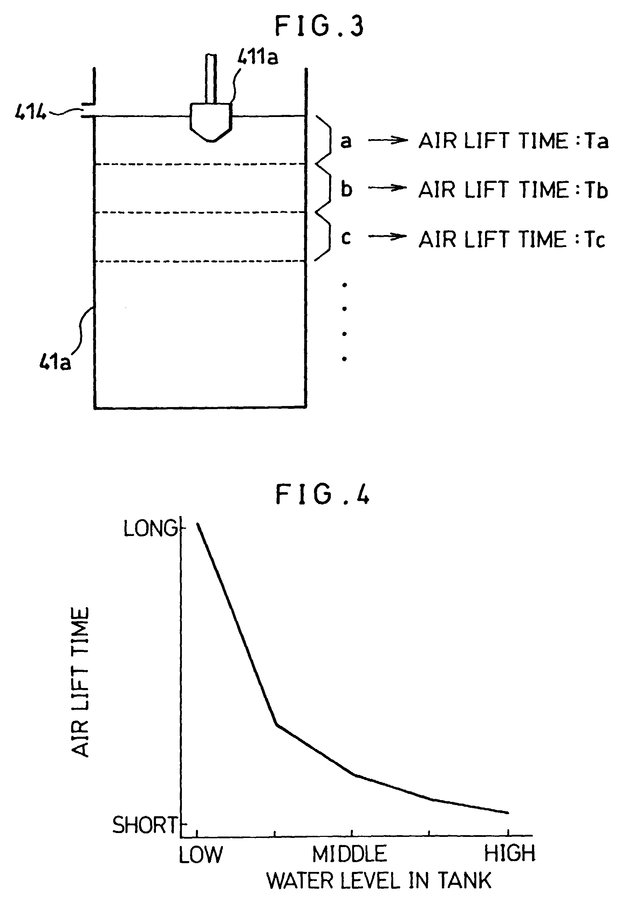

Fig. 3 shows different water levels in the first flow regulation tank 41a and associated air lift times (operating times) assigned to the air lift pump for pumping a predetermined amount of water, as described in more detail below. Fig. 4 shows an empirical air lift time required for an air lift pump to transport a predetermined amount of water as a function of the water level in the tank. As seen from Fig. 4, a longer time is required in transporting a predetermined amount of water when the water level becomes lower in the first flow regulation tank 41a.

For example, for a water level in the range "a" below the highest level (which is the level of the overflow outlet 414) as shown in Fig. 3, air lift time is set to Ta, say, which corresponds to a time within the same range on the abscissa of Fig. 4; for a water level in the range "b" below "a", air lift time is set to Tb which corresponds to a time in the same range on the abscissa of Fig. 4, and so on. For water levels in the lowest domain, say below the range "c" shown in Fig. 3, air lift time is fixed to a certain value Tx, since air lift time becomes exceedingly long in the lowest range, as shown in Fig. 4. It will be understood that

$$Ta < Tb < Tc < Tx.$$

The empirical data representing the curve of Fig. 4 is stored in a non-volatile memory of a microcomputer of the control unit 5, so that it can be used as a lookup table for controlling the air lift pump.

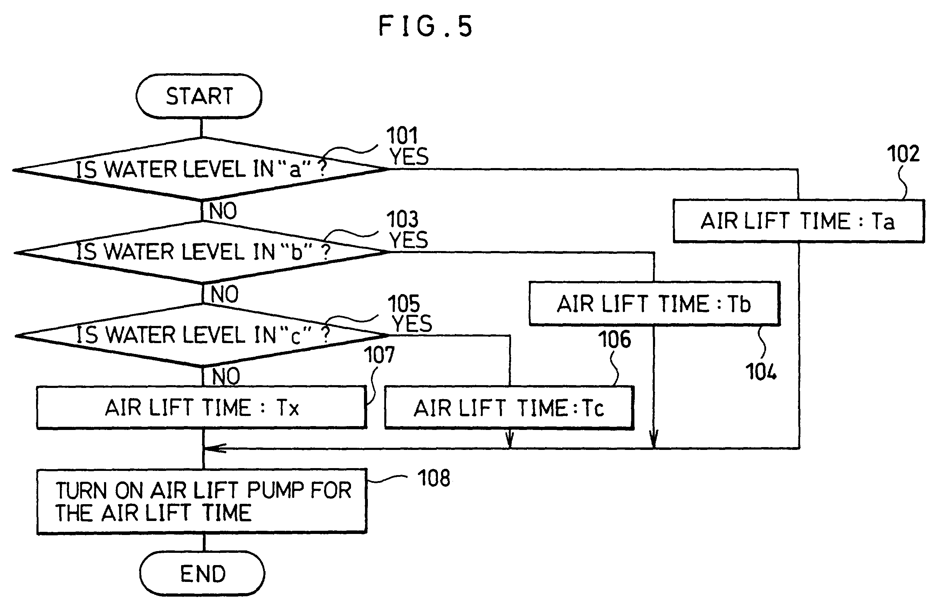

Referring now to a flow-chart shown in Fig. 5, operation of a waste water treatment apparatus of the invention will now be described. The operation will be performed periodically, say every 30 minutes, by the control unit 5, each time carrying out the procedure as depicted in the flow-chart.

In operation, the water level in the first flow regulation tank 41a is detected by the water level sensor 411 and checked if it is in the highest range "a" of water level shown in Fig. 3 (Step 101). If it is ("YES" in Step 101), the air lift time is set to Ta (Step 102), so that the air lift pump 47 is activated for a period of Ta (Step 108).

However, it is not ("NO" in Step 101), it is determined whether the water level is in the next highest range "b" (Step 103). If it is ("YES" in Step 103), then the air lift time is set to Tb (Step 104), so that the air lift pump 47 is activated for a period of Tb (Step 108).

If is not ("NO" in Step 103), the procedure proceeds to Step 105 to determine whether the water level is in the third range "c". If it is ("YES" in Step 105), then the air lift time is set to Tc (Step 106), so that the air lift pump 47 is activated for a period of Tc (Step 108).

However, if it is not ("NO" in Step 105), the air lift time is set to Tx (Step 107) so as to activate the air lift pump 47 for a period of Tx (Step 108).

Consequently, the apparatus enables pumping of a constant volume of waste water out of the first flow regulation tank 41a into the liquid treatment tank 43 at all water levels by adjusting the air lift time as described above, thereby always securing a sufficient capacity for waste water from the kitchen while performing the waste water treatment in a stable condition.

In the same manner, the air lift pump 48 is also controlled by use of the water level sensor 412 provided in the second flow regulation tank 41b and a similar lookup table associated with the air lift pump 48.

In place of float type water level sensors 411 and 412 as described above, other types of sensors such as electrostatic sensors may be used equally well for the same purpose.

Incidentally, it is necessary to maintain the water level in the first flow regulation tank 41a as low as possible, so that it takes a fairly long period of time to transport a predetermined amount of waste water from the first flow regulation tank 41a to the liquid treatment tank 43 by the air lift pump 47. As a result, noise caused by the ejection and falling of the waste water mixed with the pumping air from the waste water outlet of the air lift

On the other hand, the water level in the liquid treatment tank 43 remains almost constant, since it receives waste water from the first flow regulation tank 41a and solid-liquid separation apparatus 42 and simply lets the water overflow to the precipitate separation tank 44.

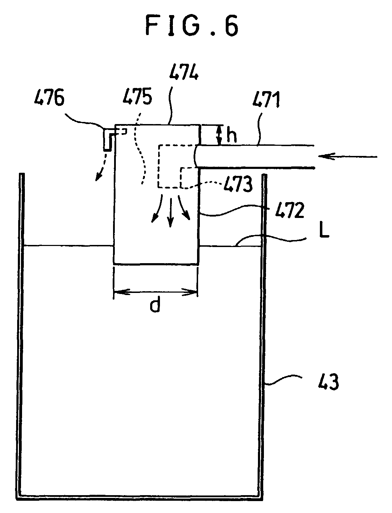

Therefore, in order to suppress the noise generated in the liquid treatment tank 43, the waste water outlet of the air lift pump 47 is provided with a vertical pipe 472 as shown in Fig. 6.

In the instance shown in Fig. 6, the vertical pipe 472 has a cylindrical shape having a larger diameter d than the air lift pump 47, and a closed upper end 474, and an open lower end submerged in the stored water in the liquid treatment tank 43 (i.e. below the surface L of the water). In addition, the vertical pipe 472 is provided at the upper end thereof with a diametrically small ventiduct 476. The horizontal end section 471 of the air lift pump 47 extending from the first flow regulation tank 41a to the liquid treatment tank 43 penetrates through the side of the vertical pipe 472 and bends downwardly towards the water in the liquid treatment tank 43, so that the lower open end 473 of the air lift pump 47 faces the water level.

By mounting the vertical pipe 472 so as to cover the lower open end 473 of the air lift pump 47, splashing noise of the waste water hitting the water in the liquid treatment tank 43 may be shut off efficiently.

It is, of course, possible to erase the noise by submerging the open end 473 in the water (i.e. below the surface L of the water), which can, however, generates a new noise due to bubbling of the air discharged from the air lift pump 47. It should be appreciated that the vertical pipe 472 of the invention may successfully eliminate noise in the liquid treatment tank 43.

This can be accomplished by making the diameter d of the vertical pipe 472 larger than that of horizontal pipe 471, and by forming a ventiduct 476 at the upper end of the vertical pipe 472, thereby leaving a large air chamber 475 under the atmospheric pressure, so that the pressure of the air exhausted from the air lift pump 47 will not be oppress the water level in the tank below the lower end of the vertical, pipe or cause the waste water to back flow into the air lift pump 47.

Another benefit of making the diameter of the vertical pipe 472 larger is that the distance h between the horizontal pipe 471 and the ceiling 474, and hence the resultant height of the apparatus, can be minimized.

It should be understood that the diametrically large vertical pipe 472 will not suffer from flotsam staying in the vertical pipe 472 or depositing on the inner wall of the vertical pipe 472, since the water in the liquid treatment tank 43 is aerated and hence has good fluidity.

The outlet section of the ventiduct 476 is preferably directed downward so that the noise generated in the air chamber 475 will not diffuse out of the ventiduct 476. Should ingress of waste water into the ventiduct take place, the waste water would run down into the liquid treatment tank 43 below the ventiduct, thereby preventing scattering of such waste water.

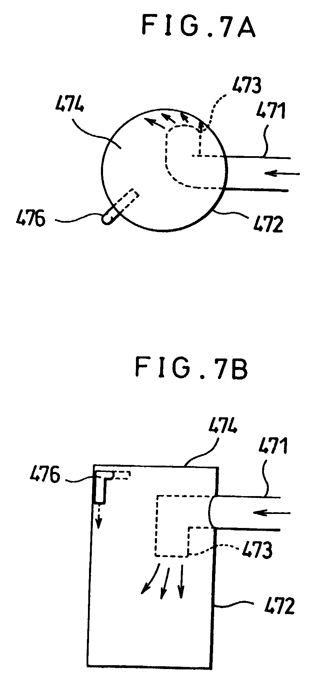

The tip section of the air lift pump 47 installed inside the vertical pipe 472 may be bent downward along the inner wall of the vertical pipe 472 as shown in Fig. 7, so that the waste water ejected from the outlet 473 of the vertical pipe 472 tends to run down on the inner wall of the vertical pipe 472, thereby minimizing the impact of the waste water with the surface water in the liquid treatment tank 43, and the resultant noise as well.

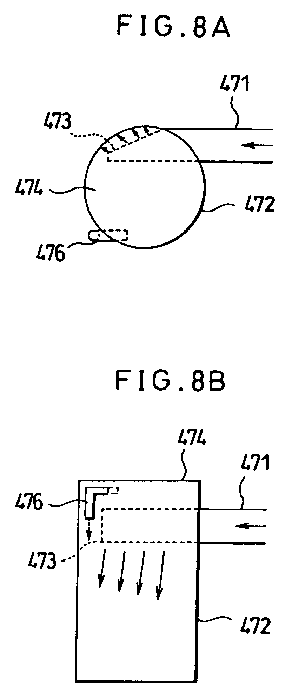

The end of the horizontal pipe 471 may be cut so that the cut end 473 of the horizontal pipe 471 comes close to the inner wall of the vertical pipe 472 as shown in Fig. 8, thereby reducing the waste water that drops directly onto the surface L of the water.

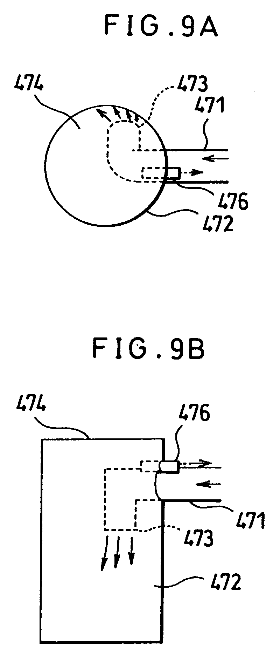

The ventiduct 476 may be positioned along and above the horizontal pipe 471 as shown in Fig. 9, so that waste water is prevented from depositing on the ventiduct 476, thereby keeping the ventiduct 476 in the air chamber clean.

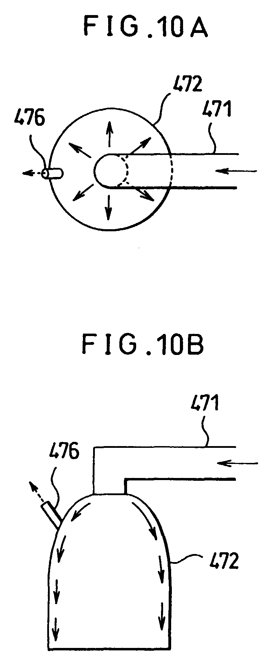

The vertical pipe 472 may be formed in a bell shape configuration, as shown in Fig. 10, so that the waste water coming out of the air lift pump will run down on the inner wall of the vertical pipe 472 to the surface of the water in the tank, making little noise.

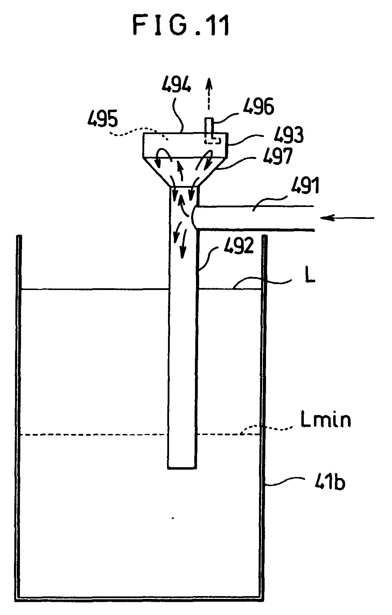

Fig. 11 depicts the outlet portion of the air lift pump 49 connecting the precipitate separation tank 46 to the second flow regulation tank 41b, showing an adequate configuration of the outlet in the second flow regulation tank 41b where the water level varies greatly.

In this example, the vertical pipe 492 connected to the horizontal pipe 491 of the pump extends sufficiently below an assumed minimum water level Lmin. The vertical pipe 492 has almost the same diameter as the horizontal pipe 491. However, the exemplary vertical pipe 492 has a funnel shaped upper section 493 formed above the connection with the horizontal pipe 491 and a diametrically large section which is covered with a ceiling panel 494 to form an air chamber 495. The air chamber 495 is provided with an L-shape ventiduct 496 having an inner end bent towards the inner wall of the air chamber 495.

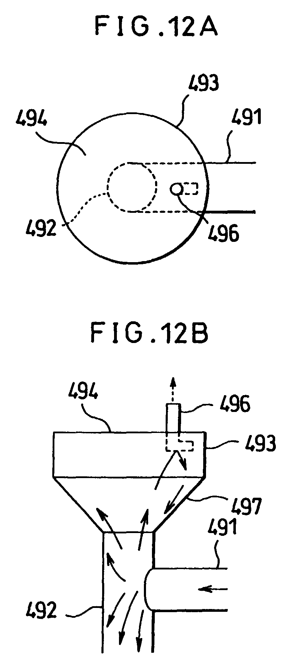

In an arrangement of the waste water outlet of the air lift pump 49 as shown in detail in Fig. 12, noise generated by the air lift pump 49 is reflected back and forth in the air chamber 495, and destructively interferes with itself, resulting in annihilation of the noise. The vertical pipe 492 itself need not be large in diameter. On the contrary, the vertical pipe 492 can be made small enough within the second flow regulation tank 41b so that the vertical pipe 492 will not interfere with other pipes in the tank while securing good passage for crushed garbage from the water channel switcher 40 (Fig. 1).

Since the air chamber 495 has a funnel shape portion 497 connected to the narrower vertical pipe 492, portion of the air lift water (i.e. water transported by the air lift pump) entering the air chamber 495 will naturally run down on the funnel shape wall 497 and into the vertical pipe 492.

If air lift water enters the ventiduct 496, it can temporarily clog the pipe, resulting in a rise in pressure inside the air chamber 495, which can spew the waste water from the ventiduct 496. Scattering of such filthy water and malodor together with the noise can be a serious hygienic problem. Therefore, in order to prevent a such problem, the ventiduct 496 is offset a little distance away from the center of the ceiling panel 494 so that the air lift water will not enter the ventiduct 496.

The ventiduct 496 is L-shaped such that the inner opening thereof is directed to the inner wall of the air chamber 495 and the outer opening is directed upward, so that the ventiduct 496 prevents air lift water ejected from the horizontal pipe 491 of the air lift pump 47 from directly entering the ventiduct 496. Noise generated in the vertical pipe 492 will be also prevented to directly propagate into the ventiduct 496.

It is noted that, since the vertical pipe 492 of the example is not thick, it will not interfere with the fluid motion in the second flow regulation tank 41b if the vertical pipe 492 extends deep in the tank.

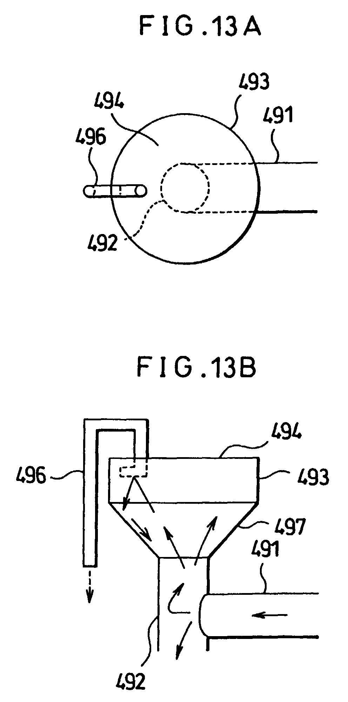

An air chamber shown in Fig. 13 is provided with a ventiduct 496 having an extended downward section, which is an improvement of the simple upward section of the ventiduct 496 of Fig. 12. This downward ventiduct 496 can lead dews, if formed, in the ventiduct 496 to drop in the tank, and direct the noise downward into the tank, thereby reducing upward scattering of the noise.

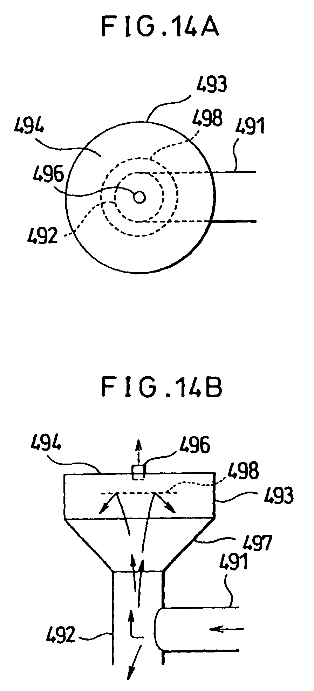

An air chamber shown in Fig. 14 has a ventiduct 496 which comprises a straight upward section provided at the center of the ceiling panel 494, and a round shielding panel 498 directly below the ventiduct 496. Although the ventiduct of this example is a simple central upward pipe, it is shielded by the shielding panel 498 from the air lift water, so that leak of the air lift water through the ventiduct is prevented. In addition, the ventiduct will not be contaminated, or clogged, by the stain of the air lift water.

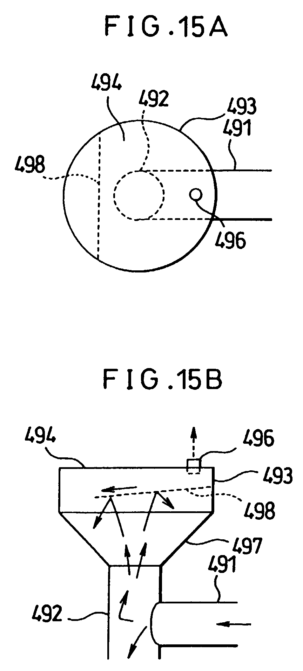

An air chamber shown in Fig. 15 is a modification of the one shown in Fig. 14, which has a ventiduct 496 formed at one corner of the ceiling panel 494, and a slant shielding panel 498 that extends from the side wall of the ventiduct 496 beneath the ventiduct 496 and over the vertical pipe 492. Because of the shielding panel 498, the same results can be obtained as the preceding examples. In addition, dews, if formed, on the ceiling panel 494 will be dropped into the vertical pipe 492.

Because of the various types of noise silencing means availed by the invention as described above, a calm and compact waste water treatment apparatus 4 can be installed on the ground for use with an existing house. It should be noted that the waste water treatment apparatus of the invention need not be insulated by a costly acoustic material to suppress noises. Consequently, the apparatus can be installed conveniently at a reduced cost.

**Claims**

1. A waste water treatment apparatus for treating waste water from a kitchen having a disposer, said apparatus comprising:

   a first flow regulation tank for receiving waste water from a kitchen while said disposer is not used, and discharging overflowing water from said first flow regulation tank to a sewage pipe;
   a second flow regulation tank for receiving waste water from the kitchen while the disposer is used;
   a solid-liquid separation apparatus for receiving waste water from said second flow regulation tank to separate solids from the water;
   a liquid treatment tank for treating the liquid separated in said solid-liquid separation apparatus using microorgans; and
   a first air lift pump for pumping the waste water from said first flow regulation tank to said liquid treatment tank.

2. The waste water treatment apparatus according to claim 1, further comprising:

   a second air lift pump for pumping waste water in said second flow regulation tank to said solid-liquid separation apparatus;
   a compost apparatus for decomposing solid components separated in said solid-liquid separation apparatus into compost by microorganism;
   a precipitate separation tank for receiving supernatant of the waste water treated in said liquid treatment tank, precipitating solid components therein, and for discharges clean supernatant water to said sewage pipe; and
   a third air lift pump for pumping the precipitate from said precipitate separation tank to the second flow regulation tank.

3. The waste water treatment apparatus according to claim 1 or claim 2, further comprising:

   a water-level sensor provided in said first flow regulation tank for detecting the level of water in said first flow regulation tank; and
   a controller for controlling said first air lift pump so as to permit constant volume of water to be pumped from said first flow regulation tank to said liquid treatment tank by said first air lift pump.

4. The waste water treatment apparatus according to claim 2, further comprising a vertical pipe in at least one of said liquid treatment tank and said second flow regulation tank, said vertical pipe having a larger cross section than an associated air lift pump and connected at the top end thereof to the waste water outlet section of said air lift pump, wherein said vertical pipe includes a ventiduct at an upper portion thereof and a depending bell-shape outlet section submerged in the water in said tank.

5. The waste water treatment apparatus according to claim 2, further comprising a vertical pipe in at least one of said liquid treatment tank and said second flow regulation tank, said vertical pipe having a larger cross section than an associated air lift pump and connected at the side thereof to the waste water outlet section of said air lift pump, wherein said vertical pipe includes a ventiduct at an upper portion thereof and a depending outlet section submerged in the water in said tank.

6. The waste water treatment apparatus according to claim 5, wherein said outlet of said air lift pump is positioned close to the inner wall of said vertical pipe.

7. The waste water treatment apparatus according to claim 5, wherein said vertical pipe is provided with an air chamber above the waste water outlet of the air lift pump, and a ventiduct formed in the upper section of said air chamber.

8. The waste water treatment apparatus according to claim 7, wherein said air chamber has an upper section having a larger diameter than said vertical pipe and a lower section having an inclined wall which is continuous with said upper section.

9. The waste water treatment apparatus according to claim 7 or claim 8, wherein said ventiduct is a narrow pipe penetrating through said air chamber to the exterior thereof, and has an air outlet directed downward.

10. The waste water treatment apparatus according to claim 9, wherein a portion of said narrow ventiduct inside said air chamber is angularly offset from said waste water outlet of said air lift pump.

11. The waste water treatment apparatus according to claim 9 or claim 10, wherein said air chamber is provided with a shielding panel for shutting the waste water discharged from said air lift pump off said air chamber.

# FIG.1

TO SEWAGE

# F I G . 2

411b
411
411a

412b
412
412a

414

41a

41b

## FIG.3

a → AIR LIFT TIME : Ta

b → AIR LIFT TIME : Tb

c → AIR LIFT TIME : Tc

## FIG.4

# FIG.5

```
        ┌─────────┐
        │  START  │
        └────┬────┘
             │
        ╱────┴────╲           101
   ╱─────────────────╲  YES                              ┌─────────────────────┐
  ╱ IS WATER LEVEL IN"a"? ╲──────────────────────────────│  AIR LIFT TIME : Ta │  102
   ╲─────────────────╱                                    └─────────────────────┘
        ╲────┬────╱
           │ NO
        ╱────┴────╲           103
   ╱─────────────────╲  YES                        ┌─────────────────────┐
  ╱ IS WATER LEVEL IN"b"? ╲──────────────────────────│  AIR LIFT TIME : Tb │
   ╲─────────────────╱                              └─────────────────────┘
        ╲────┬────╱                                        106        104
           │ NO
        ╱────┴────╲           105
   ╱─────────────────╲  YES
  ╱ IS WATER LEVEL IN"c"? ╲─────────────┐
   ╲─────────────────╱          107     │
        ╲────┬────╱                      │
           │ NO                          │
  ┌─────────────────────┐   ┌─────────────────────┐
  │  AIR LIFT TIME : Tx │   │  AIR LIFT TIME : Tc │
  └──────────┬──────────┘   └─────────────────────┘
             │
             ◄──────────────────────────────
             │
  ┌─────────────────────────────┐
  │ TURN ON AIR LIFT PUMP FOR   │  108
  │ THE AIR LIFT TIME           │
  └──────────────┬──────────────┘
                 │
            ┌────┴────┐
            │   END   │
            └─────────┘
```

EP 1 092 475 A2

FIG.6

## FIG.7A

## FIG.7B

FIG.8A

473
471
474
472
476

FIG.8B

474
471
476
473
472

# FIG.9A

# FIG.9B

# FIG.10A

# FIG.10B

# F I G .11

FIG.12A

FIG.12B

## FIG.13A

## FIG.13B

# FIG.14A

# FIG.14B

# F I G . 15 A

# F I G . 15 B